(19) Europäisches Patentamt
European Patent Office
Office européen des brevets

(11) **EP 0 912 378 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.[7]: **B60T 8/00**, B60T 8/50, B60T 8/24

(21) Anmeldenummer: 97921770.0

(22) Anmeldetag: **25.04.1997**

(86) Internationale Anmeldenummer:
**PCT/EP97/02137**

(87) Internationale Veröffentlichungsnummer:
**WO 98/03381 (29.01.1998 Gazette 1998/04)**

(54) **VERFAHREN ZUR VERBESSERUNG DES REGELVERHALTENS EINES ABS**

METHOD OF IMPROVING ABS CONTROL BEHAVIOUR

PROCEDE POUR AMELIORER LE COMPORTEMENT EN REGULATION D'UN SYSTEME ANTIBLOCAGE

(84) Benannte Vertragsstaaten:
**DE FR GB**

(30) Priorität: **18.07.1996 DE 19628972**

(43) Veröffentlichungstag der Anmeldung:
**06.05.1999 Patentblatt 1999/18**

(73) Patentinhaber: **Continental Teves AG & Co. oHG 60488 Frankfurt (DE)**

(72) Erfinder: **BATISTIC, Ivica D-60385 Frankfurt am Main (DE)**

(74) Vertreter: **Blum, Klaus-Dieter Continental Teves AG & Co. oHG, Guerickestrasse 7 60488 Frankfurt (DE)**

(56) Entgegenhaltungen:
DE-A- 3 345 729      DE-A- 3 413 738
DE-A- 3 905 045      DE-A- 4 234 819
DE-A- 19 522 632     DE-A- 19 522 634
DE-A- 19 622 839

• ATZ AUTOMOBILTECHNISCHE ZEITSCHRIFT, Bd. 97, Nr. 1, 1.Januar 1995, Seiten 8/9, 12-19, XP000486415 LEFFLER H ET AL: "BREMSANLAGE UND SCHLUPF-REGELSYTEME DER NEUEN 7ER-REIHE VON BMW BRAKE AND WHEEL SLIP CONTROL SYSTEMS OF THE NEW 7 SERIES BMW" in der Anmeldung erwähnt
• ATZ AUTOMOBILTECHNISCHE ZEITSCHRIFT, Bd. 98, Nr. 4, 1.April 1996, Seiten 188-191, 194 - 196, 198, XP000582531 KURZ G ET AL: "BREMSANLAGE UND SCHLUPFREGELUNGS-SYSTEME DER NEUEN BAUREIHE 5 BMW" in der Anmeldung erwähnt

**Beschreibung**

Die Erfindung bezieht auf ein Verfahren zur Verbesserung des Regelverhaltens eines Antiblokkiersystems, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zum Erkennen einer Kurvenfahrtsituation und der Kurvenrichtung gewonnen werden, bei dem bei Kurvenfahrterkennung anstelle des Standard-Regelmodus ein Sonder- bzw. Kurven-Regelmodus in Funktion gesetzt wird, der bereits im Teilbremsbereich eine Verringerung des Bremsdrucks an dem kurveninneren Vorderrad und/oder kurveninneren Hinterrad unmittelbar oder verzögert hervorruft.

Aus der DE 34 13 738 C2 ist bereits ein Blokkierschutzregelungssystem mit einer Kurvenfahrterkennungsschaltung, die ebenfalls auf der Radschlupfmessung beruht, bekannt. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "Select-low" oder "Select-high", nach denen der Druckverlauf in den einzelnen Bremsdruckregelkanälen dieser Bremsanlage geregelt wird, und Grenzwerte für das Wirksamwerden dieser Auswahlkritierien variiert. Auf diese Weise soll die Regelung den unterschiedlichen Bedingungen während einer Geradeausfahrt und während einer Kurvenfahrt angepaßt werden.

Aus der DE 21 19 590 A1 ist es bekannt, ein Kurvenfahrterkennungssignal mit Hilfe eines Querbeschleunigungsmeßgerätes, wie eines Quecksilberschalters, zu gewinnen.

Ferner ist es bereits bekannt, die Funktionen eines ABS zu erweitern, indem das System zum Verbessern der Fahrstabilität bzw. Bremsstabilität in der Kurve eingesetzt wird. Hierzu wird während einer Kurvenfahrt und einer Teilbremsung, d.h. bei einem Bremsvorgang, bei dem die ABS-Ansprechschwellen nicht erreicht werden, durch eine gezielte Verzögerung des Bremsdruckaufbaus an den kurveninneren Rädern im Vergleich zum Bremsdruck an den kurvenäußeren Rädern ein stabilisierendes Moment um die Hochachse des Fahrzeugs hervorgerufen ("Bremsanlage und Schlupf-Regelsystem der neuen 7erReihe von BMW", ATZ 97(1995),Seiten 8-15 und "Bremsanlage und Schlupf-Regelungssysteme der neuen Baureihe 5 von BMW", ATZ 98(1996) Seiten 188-194). Die Information über den aktuellen Lenkwinkel wird, wenn kein Lenkwinkelsensor verwendet wird, aus der Querbeschleunigung abgeleitet, die wiederum aus den Radsensorsignalen berechnet wird.

Der Erfindung liegt nun die Aufgabe zugrunde, bei einem Regelungssystem, das auch zur Kurvenfahrterkennung ausschließlich die Raddrehsignale auswertet, die nachteiligen Auswirkungen einer "Falscherkennung" zu vermeiden. Bei ausschließlichem Verlaß auf die Raddrehzahlsignale gibt es nämlich Situationen, die eine Falscherkennung begünstigen. Dies gilt beispielsweise für eine Kurvenfahrt auf μ-Splitt, d. h. auf unterschiedlichem Reibbeiwert rechts/links, wenn die Kurveninnenseite einen hohen Reibbeiwert, die Kurvenaußenseite dagegen einen niedrigen Reibbeiwert aufweist. In dieser Situation könnte ein stabilisierender Eingriff an dem vermeintlich kurveninneren Rad ein destabilisierendes Giermoment hervorrufen.

Es hat sich herausgestellt, daß durch das in Anspruch 1 beschriebene Verfahren die Auswirkungen infolge einer Falscherkennung der Kurvenfahrtsituation behoben werden können. Das Besondere des erfindungsgemäßen Verfahrens besteht nach dem kennzeichnenden Teil des Anspruchs 1 darin, daß nach dem Einsetzen des Sonder-Regelmodus die Wiederbeschleunigung des Rades, dessen Bremsdruck infolge der Sonderregelung reduziert wurde, also desjenigen Rades, das fälschlicherweise als kurveninneres Rad erkannt wurde, zur Feststellung einer solchen Falscherkennung analysiert wird. Wenn die Wiederbeschleunigung dieses Rades einen vorgegebenen Grenzwert überschreitet, wird Bremsdruck in die Radbremse dieses Rades für die Dauer der Grenzwertüberschreitung eingesteuert.

In den Unteransprüchen sind vorteilhafte Ausführungsbeispiele der Erfindung beschrieben. Es hat sich als zweckmäßig erwiesen, die Dauer der Bremsdruckeinsteuerung zur Behebung der unerwünschten Wirkungen einer Falscherkennung nach der Beziehung

$$t_{DAi} = k_1 \times (a_i - a_{grenz1})$$

mit $a_{grenz1}$ zwischen 2g und 5g, z.B. 4g, zu bemessen.

Nach einem weiteren Ausführungsbeispiel, daß sich auf ein Regelungssystem bezieht, bei dem der Bremsdruck im Regelfall durch pulsweises Öffnen eines Einlaßventils eingesteuert wird, erwies es sich als vorteilhaft, zusätzlich zu dem nach vorgenannter Beziehung bemessenen Bremsdruckanteil eine bestimmte Erhöhung der Druckansteuerung vorzunehmen. Es wird nämlich der Druckaufbaupuls, der sich an den ersten Druckaufbaupuls anschließt, um eine zusätzliche, von einem zweiten Grenzwert abhängige Zeitspanne

$$\Delta t_{DAi} = k_2 \times (a_i - a_{grenz2}),$$

mit $a_{grenz2}$ = 1,5g bis 2,5g, verlängert. Das als Folge der Falscherkennung entstandene Bremsdruckdefizit am vermeintlich kurveninneren Rad wird auf diese Weise besonders schnell und ohne Gefahr für die Stabilität der Regelung behoben.

Weitere Einzelheiten, Vorteile und Anwendungsmöglichkeiten der Erfindung gehen aus der folgenden Beschreibung eines Ausführungsbeispiels anhand des beigefügten Flow-Charts hervor.

Dieses Flow-Chart gibt in vereinfachter Darstellung einen Ausschnitt aus dem Regelungsablauf oder Programmablauf eines Antiblockiersystems wieder. Es handelt sich um den Programmausschnitt, durch den bei dem das erfindungsgemäße Verfahren verwirklicht wird und sich auf den Regelungsablauf auswirkt. Das Beispiel bezieht sich also auf ein ABS mit Programmstruktur. Bei einem Regelungssystem mit fester Verdrahtung könnten natürlich die einzelnen Verfahrensschritte durch entsprechende logische Verknüpfungen realisiert werden.

Nach dem START des dargestellten Unterprogramms wird in einem ersten Entscheidungsschritt 1 festgestellt, ob bereits der Sonder-Regelmodus in Gang gesetzt wurde und damit ein stabilisierender Eingriff erfolgte. Bei einer Kurvenfahrterkennung wird nämlich bei einem Regelverfahren der hier genannten Art durch die Druckentlastung der kurveninneren Räder ein die Kurvenfahrt ausgleichendes, stabilisierendes Giermoment um die Hochachse des Fahrzeugs erzeugt. Der Bremsdruck an den kurvenäußeren Rädern wird, wenn die Regelung während einer Teilbremsung einsetzt, konstant gehalten oder erhöht sich automatisch durch die Unterbindung eines weiteren Bremsdruckaufbaus an dem oder an den kurveninneren Rädern.

Ist bereits der Sonder-Regelmodus in Funktion, bestimmt der Ja-Ausgang der Verzweigung 1 den weiteren Verfahrensablauf. Es wird die Wiederbeschleunigung $a_i$ des Rades analysiert. Sobald der maßgebliche Wiederbeschleunigungsgrenzwert $a_{grenz}$ überschritten ist, wird für die Dauer der Überschreitung über den Ja-Ausgang der Verzweigung 2 eine Druckeinsteuerung in die Radbremse desjenigen Rades herbeigeführt, das fälschlicherweise als kurveninneres Rad identifiziert und deshalb durch die Sonder-Regelung druckentlastet wurde. Diesen Druckaufbau zum Beheben der Falscherkennung symbolisiert ein Funktionsblock 3 in dem dargestellten Flow-Chart.

zuvor wurde bereits erläutert, daß sich diese Druckeinsteuerung aus einem permanenten Anteil, der nach der Beziehung

$$t_{DAi} = k_1 \times (a_i - a_{grenz1})$$

mit i = 1...4 bemessen ist, und aus einem zusätzlichen Anteil

$$\Delta t_{DAi} = k_2 \times (a_i - a_{grenz2}),$$

mit $a_{grenz2}$ = 1,5g bis 2,5g, zusammensetzt. Dieser zusätzliche Anteil wirkt sich auf den Druckaufbau in dem an den ersten Einsteuerimpuls anschließenden Druckaufbaupuls aus.

In einem Ausführungsbeispiel wurde für "$a_{grenz2}$" ein Wert von 2g vorgegeben. Die Größen $k_1$ und $k_2$ sind Umrechnungsfaktoren. Der Index i deutet daraufhin, daß diese Druckeinsteuerung radindividuell errechnet und ausgeführt wird; i kennzeichnet also das jeweils betroffene, druckentlastete bzw. als "kurveninneres" Rad identifizierte Fahrzeugrad.

Die Bremsdruckeinsteuerung zur Behebung der fälschlichen Druckentlastung sollte grundsätzlich möglichst bald abgeschlossen sein. Dabei ist jedoch eine zu hohe Druckansteuerung, an die sich wiederum ein Druckabbau anschließen müßte, zuvermeiden.

Dem Flow-Chart ist außerdem zu entnehmen, daß über den Nein-Ausgang der Verzweigung 1 in einem Abfrageschritt 4 festgestellt wird, ob eine Kurvenerkennung vorliegt und die Schwellen für den Einsatz des Sonder-Regelmodus überschritten sind. Sind die Schwellen überschritten, wird - symbolisiert durch die Funktion 5 - von dem Standard-Regelmodus des dargestellten Antiblockiersystems auf den Sonder-Regelungsmodus umgeschaltet.

Wie bereits ausgeführt wurde, ist eine Falscherkennung bei einem Regelungssystem, das alle Informationen aus dem Drehverhalten der Räder ableitet, unter bestimmten Bedingungen unvermeidbar. Mit dem erfindungsgemäßen Verfahren werden jedoch auf einfache Weise die Auswirkungen einer solchen Falscherkennung behoben, bevor ein destabilisierendes Giermoment entstehen oder eine Verlängerung des Bremsweges als Folge der fälschlichen Druckentlastung eintreten kann.

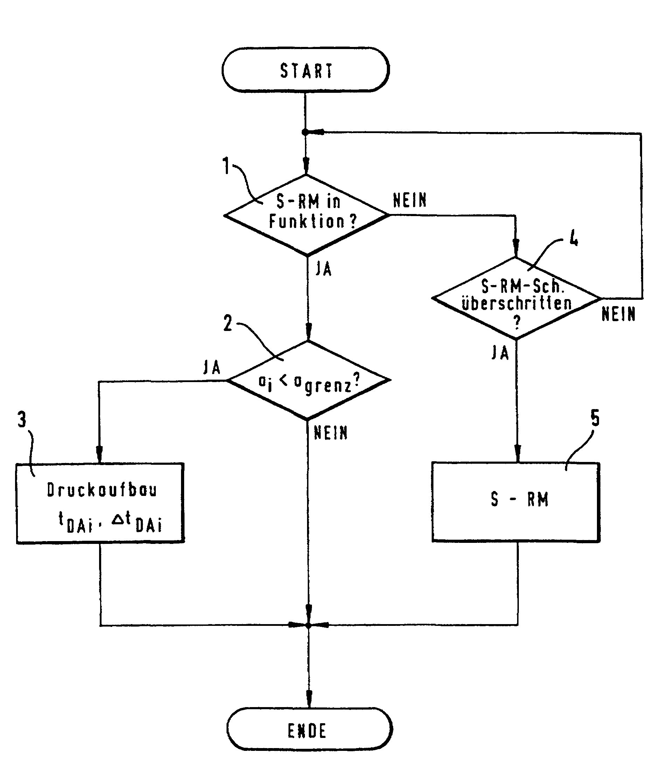

**Patentansprüche**

1. Verfahren zur Verbesserung des Regelverhaltens eines Antiblockiersystems, insbesondere zur Verbesserung der Lenkbarkeit des Fahrzeugs und der Fahrstabilität während einer Kurvenfahrt, bei dem aus dem Drehverhalten der Fahrzeugräder eine Fahrzeug-Referenzgeschwindigkeit abgeleitet und Kriterien zum Erkennen einer Kurvenfahrtsituation und der Kurvenrichtung gewonnen werden, bei dem bei Kurvenfahrterkennung anstelle des Standard-Regelmodus ein Sonder- bzw. Kurven-Regelmodus in Funktion gesetzt wird, der bereits im Teilbremsbereich eine Verringerung des Bremsdrucks an dem kurveninneren Vorderrad und/oder kurveninneren Hinterrad unmittelbar oder verzögert hervorruft, **dadurch gekennzeichnet, daß** nach dem Einsetzen des Sonder-Regelmodus die Wiederbeschleunigung ($a_i$) des Rades (i; i=1 bis 4), dessen Bremsdruck infolge der Sonder-Regelung reduziert wurde, zur Feststellung einer "Falscherkennung" analysiert wird, wobei, wenn die Wiederbeschleunigung ($a_i$) dieses Rades (i) einen vorgegebenen Grenzwert ($a_{grenz1}$) überschreitet, Bremsdruck in die Radbremse dieses Rades für die Dauer der Grenzwert-Überschreitung eingesteuert wird.

**2.** Verfahren nach Anspruch 1, **dadurch gekennzeichnet, daß** die Dauer der Bremsdruckeinsteuerung nach der Beziehung

$$t_{DAi} = k_1 \times (a_i - a_{grenz1})$$

mit i = 1....4
bemessen wird, wobei für die Wiederbeschleunigung ($a_i$) ein Grenzwert ($a_{grenz1}$) im Bereich zwischen 2g und 5g, z.B. ein Grenzwert von etwa 4g gewählt wird.

**3.** Verfahren nach Anspruch 1, bei dem der Bremsdruck im Regelfall durch pulsweises Ansteuern und Öffnen eines elektrisch betätigbaren Einlaßventils eingesteuert wird, **dadurch gekennzeichnet, daß** die Dauer der Bremsdruckeinsteuerung nach der Beziehung

$$t_{DAi} = k_1 \times (a_i - a_{grenz1})$$

mit i = 1...4
bemessen wird, wobei für die Wiederbeschleunigung ($a_i$) des Rades (i) ein erster Grenzwert ($a_{grenz1}$) im Bereich zwischen 2g und 5g, z.B. ein Grenzwert von etwa 4g, gewählt wird, und daß der Druckaufbaupuls, der sich an den ersten, bei einem über dem ersten Grenzwert ($a_{grenz1}$) liegender Wiederbeschleunigung ausgelösten Druckaufbaupuls anschließt, um eine zusätzliche, von einem zweiten Grenzwert ($a_{grenz2}$) abhängige Zeitspanne

$$\Delta t_{DAi} = k_2 \times (a_i - a_{grenz2})$$

mit $a_{grenz2}$ = 1,5g bis 2,5g, z.B. 2g
verlängert wird.

## Claims

**1.** Process of improving the control behavior of an antilock system, in particular, of improving the steerability and driving stability of the automotive vehicle during driving around a bend, wherein a vehicle reference speed is derived and criteria for identifying a cornering situation and the direction of the bend are obtained from the rotating behavior of the vehicle wheels and wherein upon identifying a cornering situation, in lieu of the standard control mode, a special or bend control mode is initiated which already in the partial brake range directly or in a delayed manner causes a reduction in the brake pressure on the front wheel at the inner side of the bend and/or on the rear wheel at the inner side of the bend, **characterized in that** upon initiation of the special control mode, re-acceleration ($a_i$) of the wheel (i; i = 1 to 4) whose brake pressure was reduced as a result of the special control, is analyzed to determine an "error in identification", with brake pressure being applied-should re-acceleration ($a_i$) of the said wheel (i) exceed a predetermined threshold value ($a_{grenz1}$) - to the wheel brake of the said wheel as long as the threshold value is exceeded.

**2.** Process according to claim 1, **characterized in that** the period during which brake pressure is applied, is rated in accordance with the formula

$$t_{DAi} = k_1 \times (a_i - a_{grenz1})$$

wherein i = 1...4 with a threshold value ($a_{grenz1}$) in the range of between 2g and 5g, for example, a threshold value of about 4g, being selected for the re-acceleration ($a_i$).

**3.** Process according to claim 1, wherein the brake pressure in the event of control is applied by pulsewise actuating and opening an electrically operable inlet valve, **characterized in that** the duration of the brake pressure application is rated in accordance with the formula

$$t_{DAi} = k_1 \times (a_i - a_{grenz1})$$

wherein i = 1....4 with a first threshold value ($a_{grenz1}$) in the range of between 2g and 5g, for example a threshold value of about 4g, is selected for the re-acceleration ($a_i$) of the wheel (i), and **in that** the pressure build-up pulse following the first pressure build-up pulse released at a first re-acceleration above the first threshold value ($a_{grenz1}$) is extended by an additional time span

$$Dt_{DAi} = k2 \times (a_i - a_{grenz2})$$

wherein $a_{grenz2}$ = 1.5g to 2.5g, for example, 2g that is determined by a second threshold value ($a_{grenz2}$).

## Revendications

**1.** Procédé d'amélioration du comportement de régulation d'un dispositif antiblocage, notamment d'amélioration de la dirigeabilité du véhicule et de la stabilité de conduite pendant une conduite en courbe, selon lequel, à partir du comportement de rotation des roues de véhicule, une vitesse de référence de véhicule est déduite et des critères sont obtenus pour la constatation d'une situation de conduite en courbe et de la direction de courbe, selon lequel, lors d'une constatation de conduite en courbe, à la place du mode de régulation standard, un mode de régulation spécial ou mode de régulation en courbe est mis en fonction, lequel mode de régulation, déjà dans la zone de freinage partiel, provoque, immédiatement ou d'une manière retardée, une réduction de la pression de frein sur la roue avant intérieure à la courbe et/ou sur la roue arrière intérieure à la courbe, **caractérisé en ce qu'**après la mise en fonction du mode de régulation spécial, la ré-accélération ($a_i$) de la roue (i ; i = 1 à 4) dont la pression de frein a été réduite du fait de la régulation spéciale est analysée pour la détermination d'une "constatation erronée" et, lorsque la ré-accélération ($a_i$) de cette roue (i) dépasse une valeur limite ($a_{grenz1}$) préfixée, la pression de frein dans le frein de cette roue fait l'objet d'une augmentation pour la durée dû dépassement de la valeur limite.

2. Procédé suivant la revendication 1, **caractérisé en ce que** la valeur de la durée de l'augmentation de pression de frein est donnée par la relation

$$t_{DAi} = k_1 \times (a_i - a_{grenz1})$$

avec i = 1 ... 4
une valeur limite ($a_{grenz1}$) dans la fourchette comprise entre 2g et 5g, par exemple une valeur limite d'environ 4g, étant choisie pour la ré-accélération ($a_i$).

3. Procédé suivant la revendication 1, selon lequel la pression de frein, dans le cas de régulation, fait l'objet d'une augmentation au moyen d'une commande et une ouverture, par impulsions, d'une valve d'entrée pouvant être actionnée électriquement, **caractérisé en ce que** la valeur de la durée de l'augmentation de pression de frein est donnée par la relation

$$t_{DAi} = k_1 \times (a_i - a_{grenz1})$$

avec i = 1 ... 4
une première valeur limite ($a_{grenz1}$) dans la fourchette comprise entre 2g et 5g, par exemple une valeur limite d'environ 4g, étant choisie pour la ré-accélération ($a_i$) de la roue (i), et **en ce que** l'impulsion d'établissement de pression qui suit la première impulsion d'établissement de pression déclenchée lors d'une ré-accélération située au-dessus de la première valeur limite ($a_{grenz1}$) est prolongée d'une durée supplémentaire, dépendant d'une seconde valeur limite ($a_{grenz2}$)

$$\Delta t_{DAi} = k_2 \times (a_i - a_{grenz2})$$

avec $a_{grenz2}$ = 1,5g à 2,5g, par exemple 2g.

START

**1**

S-RM in
Funktion ?

NEIN

JA

**2**

JA

$\sigma_i < \sigma_{grenz}$ ?

NEIN

**3**

Druckaufbau
$t_{DAi} \cdot \Delta t_{DAi}$

**4**

S-RM-Sch.
überschritten
?

NEIN

JA

**5**

S - RM

ENDE